# EUROPEAN PATENT SPECIFICATION

(11) **EP 3 543 138 B1**
(45) Date of publication and mention of the grant of the patent: **28.04.2021**
(21) Application number: 19164300.6
(22) Date of filing: 21.03.2019
(51) Int. Cl.: B64D 15/16

(54) **INSTALLATION OF PNEUMATIC DE-ICERS WITH VERTICALLY ALIGNED CARBON NANOTUBES**
INSTALLATION VON PNEUMATISCHEN ENTEISERN MIT VERTIKAL AUSGERICHTETEN KOHLENSTOFF-NANORÖHRCHEN
INSTALLATION DE DÉGIVREURS PNEUMATIQUES COMPORTANT DES NANOTUBES DE CARBONE ALIGNÉS VERTICALEMENT

(30) Priority: 22.03.2018 US 201815928671
(43) Date of publication of application: 25.09.2019
(73) Proprietor: Goodrich Corporation, Charlotte, NC 28217-4578 (US)
(72) Inventor: HU, Jin, Hudson, OH Ohio 44236 (US); SLANE, Casey, Richwood, OH Ohio 43344 (US)
(74) Representative: Dehns

(56) References cited:
- EP-A1- 3 098 166
- WO-A1-2011/087412
- WO-A1-2016/144683
- WO-A2-2012/092623
- US-A1- 2011 036 828

## Description

### BACKGROUND

The application relates generally to ice protection, and specifically to pneumatic de-icing devices.

An aircraft moving through the air or clouds is subjected to ice formation, and anti-icing or de-icing devices can be used to remove or prevent ice from accumulating on exterior surfaces of the aircraft. One method of de-icing is mechanical de-icing, which includes the use of a pneumatic de-icer with inflatable tubes on a surface. The tubes inflate and deflate in order to break the adhesion of ice on the surface, exposing the cracked ice particles to the aerodynamic flow, and shedding accumulated ice and snow.

Pneumatic de-icers for aircraft are bonded directly to an airframe, usually a wing (especially a leading edge), with varying types of adhesives. Chemical adhesives can be used to bond pneumatic de-icers to wings in conjunction with a primer. These types of adhesives can take days to cure before an aircraft can operate as normal. Additionally, these types of adhesives require a highly skilled operator to apply and have high scrap rates if not properly administered.

Pressure sensitive adhesives (PSAs) are also frequently used. PSAs are laminated to pneumatic de-icers during pneumatic de-icer manufacturing and shipped with release liners to prevent dust and contamination. When the pneumatic de-icer is applied to the surface, a hand roller can be used to "wet out" the PSA adhesive for increased adhesion. However, during this application, it is difficult to develop enough pressure throughout the pneumatic de-icer during construction. This is due in part to varying configuration throughout the pneumatic de-icer, and due in part to the thickness of the pneumatic de-icer. Thus, some features of the pneumatic de-icer make it difficult to achieve uniform pressure and obtain a good "wetted out" surface with excellent adhesion. Because of this, some areas tend to lift or peel back from the wing after time passes WO-A-2011/087412 describes an ice-protection arrangement comprising a conductive layer which includes aligned nanotubes.

### SUMMARY

In one embodiment, an ice protection arrangement for an aircraft surface is defined in accordance with appended claim 1.

In another embodiment, a method of attaching an ice protection arrangement to an aircraft is defined in accordance with appended claim 7.

### BRIEF DESCRIPTION OF THE DRAWINGS

FIGS. 1A-1B are schematic side views of a pneumatic de-icer assembly attached to aircraft with a vertically aligned carbon nanotube loaded adhesive.
FIGS. 2A-2I are a series of schematic side view flow charts of an attachment process of a pneumatic de-icer to a wing surface with a vertically aligned carbon nanotube loaded pressure sensitive adhesive.
FIGS. 3A-3H are a series of schematic side view flow charts of an attachment process of a pneumatic de-icer to a wing surface with a vertically aligned carbon nanotube loaded chemical adhesive.

### DETAILED DESCRIPTION

Vertically aligned carbon nanotubes (Z-CNTs) can be used to quickly and efficiently adhere pneumatic de-icers to aircraft wing leading edges. Z-CNTs, or vertically aligned carbon nanotube arrays, are a unique microstructure of carbon nanotubes (CNTs) oriented along their longitudal axes normal to a substrate surface. Z-CNTs effectively heighten anisotropic properties of CNTS layers, networks or arrays. Z-CNTs can be applied to existing commercial adhesives, such as pressure sensitive adhesives (PSAs) to increase bond strength while maintaining speed of application. Alternatively, Z-CNTs can be used with chemical adhesives to create immediate bond strength and allow aircraft to enter service quickly instead of curing for several days.

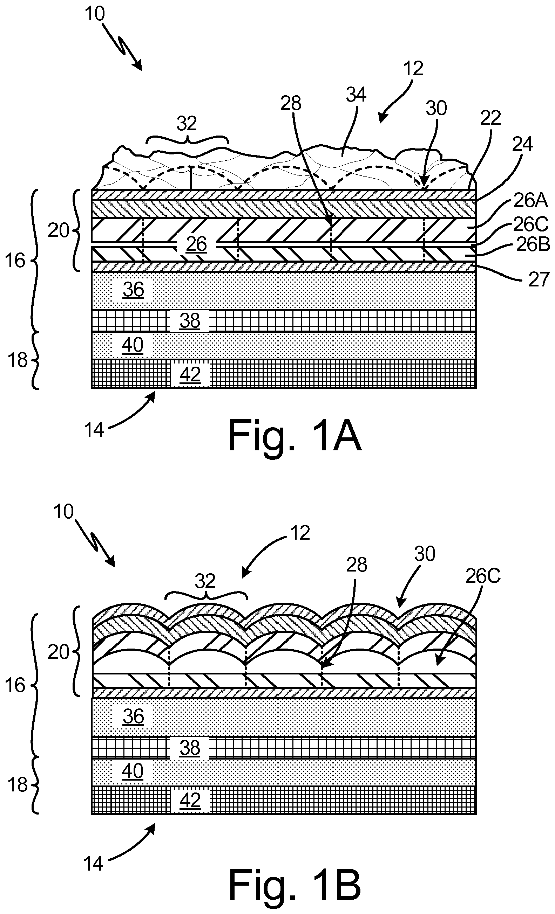

FIGS. 1A-1B are schematic side views of a pneumatic de-icer assembly attached to aircraft wing surface 42 with a vertically aligned carbon nanotube loaded adhesive. FIG. 1A shows attached ice protection arrangement 10 in a resting posture (i.e. not inflated), and FIG. 1B shows attached ice protection arrangement 10 in an active posture (i.e. inflated). FIGS. 1A and 1B will now be discussed together. Ice protection arrangement 10 has a first side 12, also referred to herein as breeze side 12, and a second side, also referred to herein as bond side 14, pneumatic de-icer adhesive assembly 16, and wing adhesive arrangement 18. Pneumatic de-icer adhesive assembly 16 includes pneumatic de-icer 20 (containing layers 22, 24, 26, 27, stitches 28, pockets 30, and chambers 32) configured to mechanically remove ice 34, adhesive primer 36, and Z-CNT loaded adhesive 38. Wing adhesive arrangement 18 includes adhesive primer 40 and wing surface 42.

Arrangement 10 has both breeze side 12 and bond side 14. Breeze side 12 faces an external environment. When arrangement 10 is fully assembled and attached to aircraft wing surface 42, breeze side 12 can see ice accumulation due to its external facing nature. Bond side 14 is the side on which pneumatic de-icer 20 is attached to the aircraft. The components of arrangement 10 will be discussed in order from breeze side 12 to bond side 14.

Pneumatic de-icer adhesive assembly 16 includes pneumatic de-icer 20, adhesive primer 36, and Z-CNT loaded adhesive 38. Pneumatic de-icer adhesive assembly 16 is prepared together prior to attachment to an aircraft surface, such as a wing surface or radome. Pneumatic de-icer adhesive assembly 16 faces breeze side 12 of arrangement 10.

Pneumatic de-icer 20 is a de-icing boot ice protection system for the leading edge of an aircraft wing or a control surface, areas prone to ice accumulation. When rapid ice accumulation occurs on leading edge surfaces, destroying smooth air flow, increasing drag, and decreasing lift, pneumatic de-icer 20 can be actuated to effect mechanical de-icing of the aircraft wing. Pneumatic de-icer 20 is one example of an appropriate pneumatic de-icing device, but other pneumatic de-icer devices with different types of layers can also be used.

Layers 22, 24, 26, 27, made of varying types of fabrics and rubbers, make up pneumatic de-icer 20 and are held together by stitches 28. The construction and alignment of layers 22, 24, 26, 27, define chamber 32, which can be inflated to effect mechanical removal of ice. Layer 22 is a weathering layer, layer 24 is a natural rubber layer, layer 26 is a fabric layer (containing stretch fabric 26A, non-stretch fabric 26B, and gap 26C), and layer 27 is an installation rubber layer.

Layer 22 is a weathering layer facing breeze side 12. Weathering layer 22 is typically made of neoprene, polyurethane, or other similar materials with sufficient stretching capabilities. Weathering layer 22 is also tough enough to protect the other layers in pneumatic de-icer 22 when ice 34 builds up on pneumatic de-icer 20.

Layer 24 is another stretching layer, such as a natural rubber, which moves along with weathering layer 22 when pneumatic de-icer 20 is inflated. Weathering layer is anchored to natural rubber layer 24 by an adhesive or other means such that layers 22, 24, move together when pneumatic de-icer 20 is inflated.

Layer 26 is a fabric layer containing stretch fabric 26A (closer breeze side 12), non-stretch fabric 26B (closer bond side 14), and gap 26C, held together by stitches 28. Stretch fabric 26A is bonded to natural rubber layer 22 by, for example, an adhesive. Non-stretch fabric 26B bonded to installation rubber layer 27 by, for example, an adhesive. Gap 26C is located between stretch fabric 26A and non-stretch fabric 26B. When pneumatic de-icer 20 is inflated (filled with pressurized air), gap 26C fills with air and creates chambers 32.

Stretch fabric 26A and non-stretch fabric 26B are held together only by stitches 28. Stitches 28 define chambers 32 within gap 26C. The shape of chambers 32 is created during inflation because stitches 28 hold pockets 30 down while inflation is occurring. Inflation of pneumatic de-icer 20 (shown in FIG. 1B) allows for mechanical removal of ice 34.

Layer 27 is an installation rubber, such as neoprene, which anchors the non-stretch fabric of fabric layer 26 to bond side 14 of arrangement 10. Layer 27 does not move upon inflation of pneumatic de-icer 20.

During operation, as shown in FIG. 1B, chambers 32 in pneumatic de-icer 20 inflates when pneumatic de-icer 20 is activated to mechanically remove ice 34. Stiches 28 define chambers 32 within pneumatic de-icer 20, and hold together all layers that make up pneumatic de-icer 20. Spaces form in chambers 32 when pneumatic de-icer 20 is activated, resulting in mechanical upheaval and dislodging of ice 34 on pneumatic de-icer 20.

In an alternative embodiment, pneumatic de-icer 20 can be replaced by a propeller de-icer. A propeller de-icer can be an electrothermal de-icer made of elastomeric compounds, such as neoprene, similar in construction to pneumatic de-icer 20. Such a propeller de-icer functions similarly to a pneumatic de-icer.

Pneumatic de-icer 20 is attached to wing surface 42 through several layers of primer and adhesive. Adhesive primer 36 promotes adhesion between pneumatic de-icer 20 and Z-CNT loaded adhesive 38. Adhesive primer 36 should promote adhesion between pneumatic de-icer 20 and Z-CNT loaded adhesive 38, and can have varying chemical properties depending on the adhesive used. If a pressure sensitive adhesive is used, adhesive primer 36 can be, for example, 3M® pn 94, a tape primer that promotes adhesion to polyethylene, polypropylene, and other difficult to adhere substrates. Z-CNT loaded adhesive 38 bonds pneumatic de-icer 20 to wing surface 42. Z-CNT loaded adhesive 38 can be a pressure sensitive adhesive (PSA) or a chemical adhesive loaded with vertically aligned Z-CNTs.

Wing adhesive arrangement 18 is bonded to pneumatic de-icer assembly 16. Wing adhesive arrangement 18 includes both wing surface 42 and adhesive primer 40. In some embodiments, a different aircraft surface, such as a radome, is used instead of wing surface 42. Adhesive primer 40 adheres Z-CNT loaded adhesive 38 to wing surface 42. Adhesive primer 40 can be the same or similar material to adhesive primer 36. Adhesive primer 40 promotes adhesion between pneumatic de-icer assembly 20 and aircraft wing surface 42. Adhesive primer 40 can be, for example, pn 94 available from 3M ®. Pneumatic de-icer adhesive assembly 16 is bonded to wing adhesive arrangement 18 via adhesive primer 40 to create attached ice protection arrangement 10 that functions to mechanically de-ice an aircraft surface.

Generally, CNTs are allotropes of carbon having a generally cylindrical nanostructure, and CNTs are both thermally and electrically conductive. CNTs have a variety of applications in aerospace technologies, nanotechnology, electronics, optics and other materials sciences.

Z-CNTs, or vertically aligned carbon nanotubes, have a unique microstructure of CNTs oriented along their longitudal axes normal to a substrate surface. Z-CNTs effectively increase anisotropic properties of CNT layers, networks, or arrays. If mixed with a composite polymer structure, Z-CNTs can conform around pre-existing fibers in a composite structure without disturbing the bulk of the composite, strengthening the composite interface and delaying cracking or breakage. In contrast to randomly distributed CNTs, Z-CNTs do not agglomerate. Additionally, if resin is introduced throughout a Z-CNT structure to form a composite material, the resin wicks in a capillary effect, leaving no voids in the resin/Z-CNT structure. Also, addition of Z-CNTs to a composite does not substantially change the overall thickness of that composite. For example, if a standard 0.10" PSA layer is used as an adhesive, the addition of Z-CNTs would not alter that thickness.

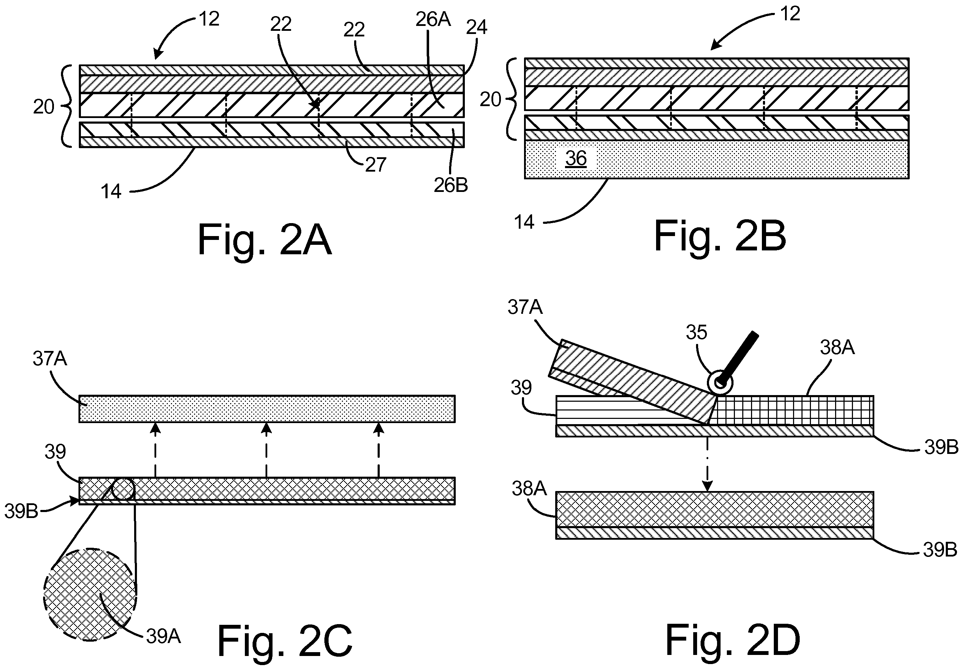

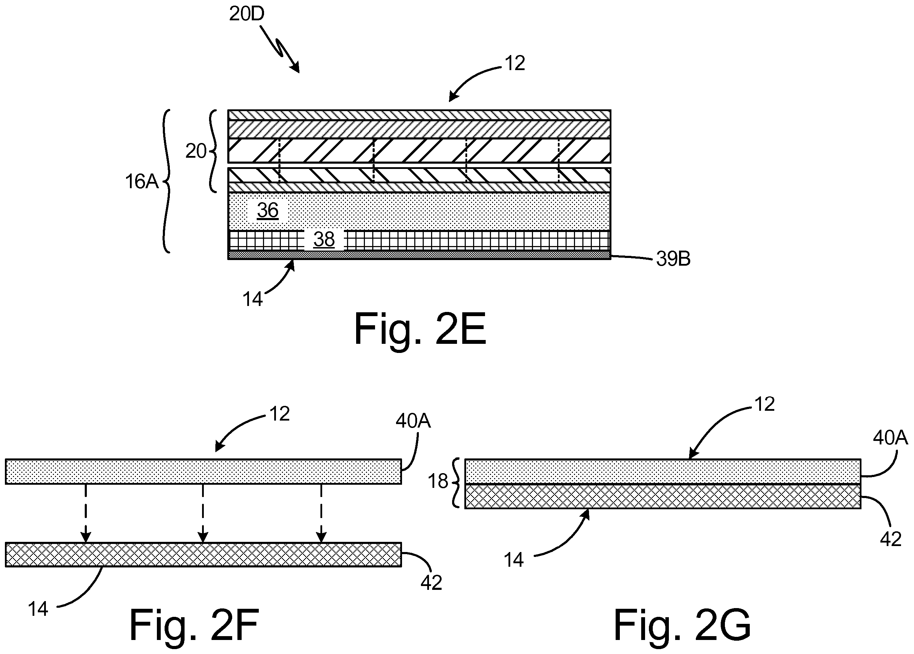

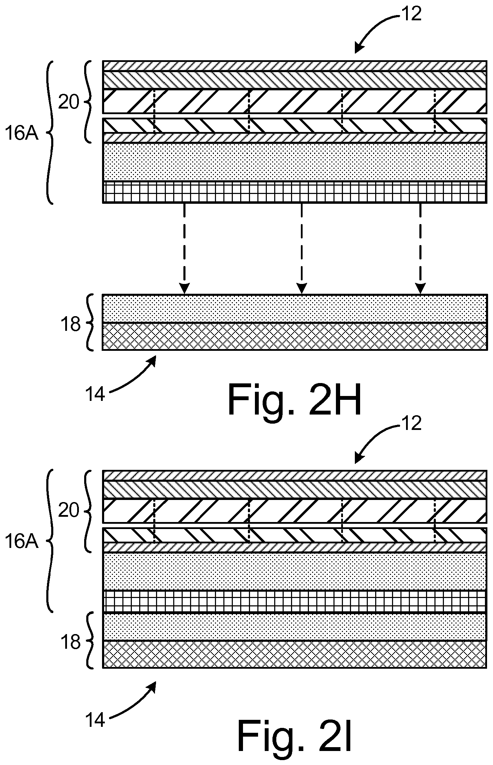

Z-CNT loaded adhesive 38 can be a PSA (38A in FIG. 2D) that forms a bond when pressure is applied to marry the adhesive with the surface to which it is being attached. Examples of suitable PSA materials include acrylates, silicones, nitriles, and styrenes. For instance, a suitable PSA is 3M® pn VHB 9473. Z-CNT loaded adhesive 38 in arrangement 10 can alternatively be by other non-curing adhesives, such as solvent based adhesives or contact adhesives, depending on the specific aircraft and de-icer system needs. A PSA Z-CNT loaded adhesive is prepared as discussed with reference to FIGS. 2C-2D.

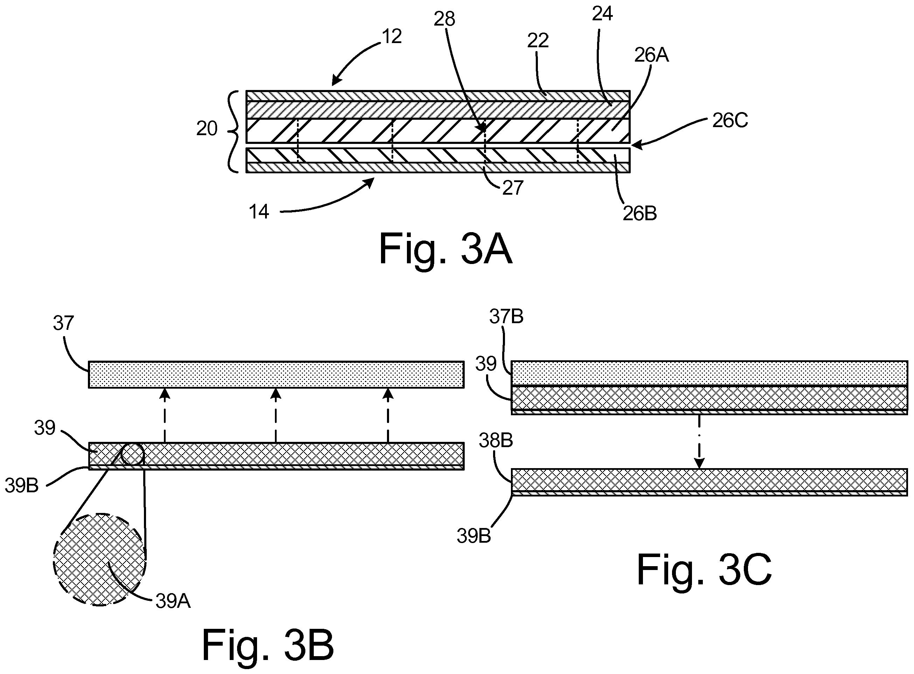

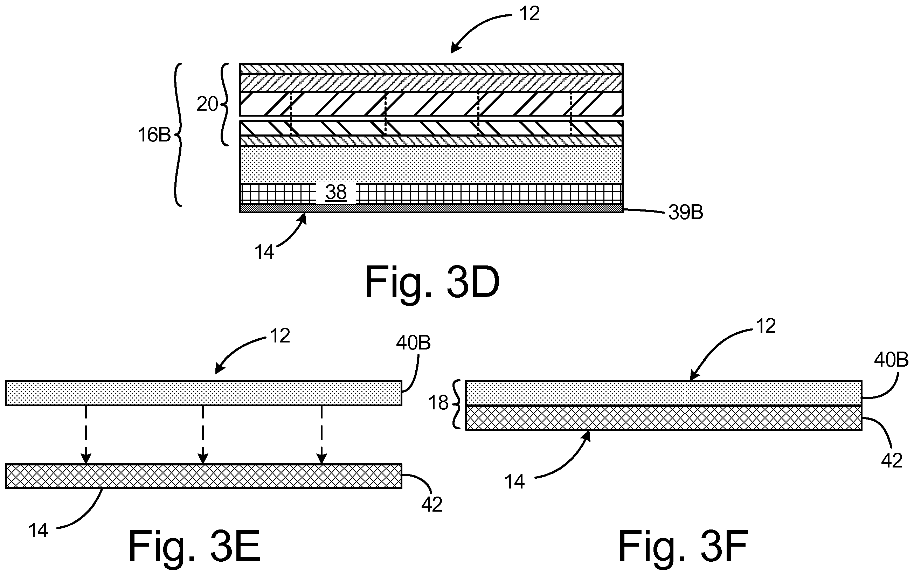

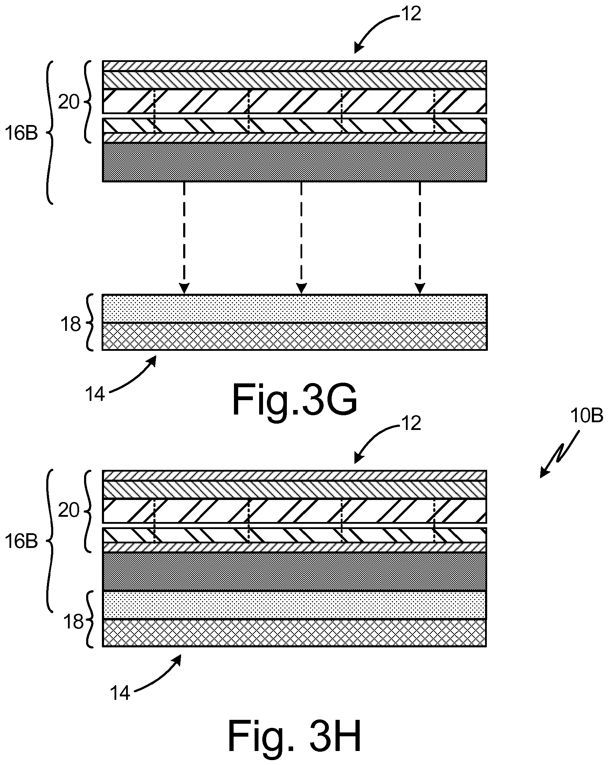

Alternatively, Z-CNT loaded adhesive 38 can be a chemical adhesive (38B in FIG. 3D). The chemical adhesive is a reactive adhesive used to bond pneumatic de-icer 20 to aircraft. The chemical adhesive can be a single component adhesive, such as an oxygen cured (anaerobic), heat cured (phenolic, epoxy, or polyurethane), UV cured (arcylates, silicones), moisture cured (silicones, polyurethanes), or B-staged adhesive. Alternatively, the chemical adhesive can be a multi component adhesive with a part A and a part B, such as an epoxy, acrylate, silicone, or urethanes. A chemical Z-CNT loaded adhesive is prepared as discussed with reference to FIGS. 3C-3D.

Addition of Z-CNTs to a PSA or a chemical adhesive fortifies the structure of the adhesive, allowing for stronger adhesion between surfaces and (in the case of chemical adhesive) shorted readiness times for operation. The addition of Z-CNTs reinforces the bond strength, allowing taking time to cure an adhesive without delayed operation of pneumatic de-icers. In other words, the minimum bond strength required to being operation of pneumatic de-icers can be reached by the combination of curing degree with Z-CNT reinforcement. Thus, use of Z-CNTs in adhesives for pneumatic de-icer boot application to aircraft wings allows for both faster application and higher bond strength.

FIGS. 2A-2I are a series of schematic side view flow charts of an attachment process of pneumatic de-icer 20 to wing surface 42 with Z-CNT loaded PSA 38A. Overall, attachment of pneumatic de-icer 20 to wing surface 42 includes manufacture of pneumatic de-icer 20 (FIG. 2A), application of adhesive primer 36 to bond side 14 of pneumatic de-icer 20 (FIG. 2B), creation of Z-CNT loaded PSA 38A (FIGS. 2C-2D), application of PSA 38A to pneumatic de-icer 20 (FIG. 2E), priming of wing surface 42 (FIG. 2F-2G), and attachment of pneumatic de-icer 20 with Z-CNT loaded PSA 38A to wing surface 42 (FIGS. 2H-2I).

FIG. 2A shows the manufacturing of pneumatic de-icer 20. As discussed in reference to FIGS. 1A-1B, pneumatic de-icer 20 includes weathering surface layer 22, natural rubber layer 24, fabric layer 26 (including stretch fabric 26A and non-stretch fabric 26B), installation layer 27, stitches 28, pockets 30, and chambers 32. When pneumatic de-icer 20 is manufactured, the layers are aligned, and layers 22, 26, 26A are bonded together with adhesive, thermal attachment, or other bonding methods. Layers 26B and 27 are similarly bonded together. Layers 26A and 26B are attached via stitches 28 with gap 26C in the middle. When inflated, gap 26C, creates chambers 32 defined by stitches 28. Inflation of chambers 32 allows for mechanical dislodging of ice.

FIG. 2B shows the application of adhesive primer 36 to pneumatic de-icer 20. Adhesive primer 36 promotes adhesion between pneumatic de-icer 20 and Z-CNT loaded adhesive 38. Adhesive primer 36 is applied evenly along bond side 14 of pneumatic de-icer 20, and can be applied by spraying, painting, wiping, or other appropriate methods.

FIGS. 2C-2D show the creation of Z-CNT loaded PSA 38A. Z-CNT loaded PSA 38A is created by applying Z-CNT sheet 39 to PSA 37A. Examples of suitable PSA materials include acrylates, silicones, nitriles, and styrenes. For instance, a suitable PSA is 3M® pn VHB 9473. Z-CNT PSA 37A can be replaced by other non-curing adhesives, such as solvent based adhesives or contact adhesives, depending on the specific aircraft and de-icer system needs. In cases where a liquid adhesive is used, the adhesive should be applied to Z-CNT sheet 39.

Z-CNT sheet 39 can be commercially available Z-CNTs, such as NanoStitch® film from N12 Technologies, which includes Z-CNTs 39A on substrate 39B. Z-CNT sheet 39 can have more than 20% Z-CNTs by volume, and ideally has greater than 50% Z-CNTs by volume. If such a commercially available Z-CNT sheet is used, substrate 39B is a mechanism to transfer Z-CNTs 39A into PSA 37A such that the Z-CNTs 39A infiltrate adhesive 37A. This can be accomplished by physically joining PSA 37A with Z-CNT sheet 39, through mechanical means, or by rolling out PSA 37A onto Z-CNT sheet 39. Better adhesion of PSA 37A to Z-CNT sheet 39 can be promoted by using a hand roller or other mechanical methods to wet out PSA 37A.

Once Z-CNTs 39A from sheet 39 are introduced to PSA 37A, Z-CNTs 39A from sheet 39 ply together and fill in voids within the adhesive, creating Z-CNT loaded PSA 38A with attached substrate 39B (no longer hosting Z-CNTS 39A). Attached substrate 39B is left on Z-CNT loaded PSA 38A for easy transport of the adhesive prior to application on an aircraft surface. The vertically aligned nature of Z-CNTs 39A increases the strength and stiffness of Z-CNT loaded 38A over that of PSA 37A alone. Z-CNTs 39A accomplish this due to their vertically aligned make-up, and by their filling of voids within Z-CNT loaded PSA 38A. This allows for a stronger bond between pneumatic de-icer 20, Z-CNT loaded PSA 38A, and aircraft wing surface 42.

Alternatively, PSA 37A can be applied to primer 36 prior to infiltration of PSA 37A with Z-CNTs 39B. In this case, PSA 37A would be applied directly to primer 36 on pneumatic de-icer 20 with mechanical means, such as rolling PSA 37A onto pneumatic de-icer 20 and wetting out PSA 37A with a hand roller and/or heat gun. Subsequently, Z-CNT sheet 39 would be applied to PSA 37A in a similar manner, attached by mechanical means and force so that Z-CNTs 39A infiltrate PSA 37A and substrate 39B stays attached to PSA 37A opposite pneumatic de-icer 20.

FIG. 2E shows the bonding of Z-CNT loaded PSA 38A onto pneumatic de-icer 20 to create pneumatic de-icer adhesive assembly 16A. Here, Z-CNT loaded PSA 38A is bonded to pneumatic de-icer 20 by adhesive primer 36. Typically, a PSA is applied to a surface through a process called "wetting out," or evenly applying pressure to the PSA as it is rolled out onto the surface. This ensured even mechanical application of the PSA over the surface, and can be done with tools such as hand rollers. Alternatively, the PSA can be heated (for example, by a heat gun) as it is rolled onto the surface to promote adhesion.

Once Z-CNT loaded PSA 38A is attached to pneumatic de-icer 20, pneumatic de-icer assembly 16A (including PSA 38A) can either be applied directly to an aircraft surface such as wing surface 42, or a release liner can be placed on PSA 38A. A release liner protects PSA 38A from dust or contamination until PSA 38A is applied to an aircraft surface. Alternatively, attached substrate 39B can be left on Z-CNT loaded PSA 38A to serve as a release liner and protect Z-CNT loaded PSA 39B from dust or other contaminants.

In some embodiments, pneumatic de-icer adhesive assembly 16 can be manufactured independently of preparation of wing adhesive arrangement 18. Pneumatic de-icer adhesive assembly 16 can be shipped as a prepared assembly with a release liner covering Z-CNT loaded PSA 38A for easy application of pneumatic de-icer adhesive assembly 16 onto an aircraft wing.

FIGS. 2F-2G show the application of PSA primer 40A onto wing surface 42 to create wing adhesive arrangement 18. Wing surface 42 is one example of an aircraft surface to which a pneumatic de-icer assembly can be applied. In other embodiments, appropriate aircraft surfaces also include radomes. Primer 40A is applied to wing surface 42 in preparation for bonding pneumatic de-icer adhesive assembly 16A onto wing surface 42. In FIG. 2F, adhesive primer 40A is applied evenly on the external surface of aircraft wing surface 42, and can be applied by spraying, painting, wiping, or other appropriate methods. Adhesive primer 40A can be the same or similar material to adhesive primer 36. Adhesive primer 40A promotes adhesion between pneumatic de-icer assembly 20 and aircraft wing surface 42. Adhesive primer 40A can be, for example, pn 94 available from 3M ®.

FIGS. 2H- 2I show bonding of pneumatic de-icer adhesive assembly 16A to wing adhesive arrangement 18. After adhesive primer 40A is applied to aircraft wing surface 42, pneumatic de-icer assembly 16 can be bonded to aircraft wing surface 42. If attached substrate 39B (or other release liner) is still on PSA 38A, it must be peeled off prior to application of pneumatic de-icer assembly 16 to wing adhesive arrangement 18. Pneumatic de-icer assembly 16 is "wetted out" evenly along the surface of aircraft wing 34 so that a secured bond is formed. Typically, a PSA is "wetted out" by mechanical force such as a hand roller. Alternatively, the pneumatic de-icer assembly 16 can be heated (for example, by a heat gun) as it is rolled onto the surface to promote adhesion.

The inclusion of Z-CNTs in PSA 38A allows for fast application of pneumatic de-icer 20 to aircraft skin 42 to increase the bond strength and maintain speed of application. Application of Z-CNT loaded PSA 38A to pneumatic de-icer 20 during manufacturing allows for shipping of entire pneumatic assembly 16 with prepared adhesive 38A for attachment to wing surface 42, cutting down on time of application in an aircraft hangar. This allows aircrafts to go back into operation much quicker, and does not necessitate long waiting times to a bond to solidify.

FIGS. 3A-3H are a series of schematic side view flow charts of an attachment process of a pneumatic de-icer to an aircraft surface with a vertically aligned carbon nanotube loaded chemical adhesive. The method depicted in FIGS. 3A-3H is similar to the method in FIGS. 2A-2I, except where noted otherwise. Overall, attachment of a pneumatic de-icer to wing surface 42 includes manufacture of the pneumatic de-icer (FIG. 3A), creation of a Z-CNT loaded chemical adhesive (FIGS. 3B-3C), application of that adhesive to the pneumatic de-icer (FIG. 3D), priming of wing surface 42 (FIG. 3E-3F), and attachment of the pneumatic de-icer with adhesive to wing surface 42 (FIGS. 3G-3H).

FIGS. 3A shows the manufacturing of pneumatic de-icer 20. As discussed in reference to FIGS. 1A-1B, pneumatic de-icer 20 includes weathering surface layer 22, natural rubber layer 24, fabric layer 26 (including stretch fabric 26A and non-stretch fabric 26B), installation layer 27, stitches 28, pockets 30, and chambers 32. When pneumatic de-icer 20 is manufactured, the layers are aligned, and layers 22, 26, 26A are bonded together with adhesive, thermal attachment, or other bonding methods. Layers 26B and 27 are similarly bonded together. Layers 26A and 26B are attached via stitches 28 to create chambers 32, which, when inflated, create pockets 30, allowing mechanical dislodging of ice.

FIGS. 3B-3C show the creation of Z-CNT loaded chemical adhesive 38B. Z-CNT loaded chemical adhesive 38B is created by applying chemical adhesive 37B to Z-CNT sheet 39. Chemical adhesive 37B can be a reactive adhesive used to bond pneumatic de-icer 20 to aircraft, for example, a single component adhesive, such as an oxygen cured (anaerobic), heat cured (phenolix, epoxy, or polyurethane), UV cured (arcylates, silicones), moisture cured (silicones, polyurethanes), or B-staged adhesive.

Z-CNT sheet 39 can be commercially available Z-CNTs, such as NanoStitch® film from N12 Technologies, which includes Z-CNTs 39A on substrate 39B. Z-CNT sheet 39 can have more than 20% Z-CNTs by volume, and ideally has greater than 50% Z-CNTs by volume. If such a commercially available Z-CNT sheet is used, substrate 39B is a mechanism to transfer to Z-CNTs 39A into chemical adhesive 37B such that the Z-CNTs 39A infiltrate the adhesive. This can be accomplished by physically joining chemical adhesive 37B with Z-CNT sheet 39, through mechanical means such as or pressing, lamination or by applying chemical adhesive 37B onto Z-CNT sheet 39. In some embodiments, the physical joining of chemical adhesive 37 with Z-CNTs 39A can be done directly on bond side 14 of pneumatic de-icer 20. Like with a non-curing adhesive, attached substrate 39B can be left with Z-CNT loaded adhesive 37B for easy transfer to an aircraft surface.

Alternatively, the chemical adhesive can be a multi component adhesive with a part A and a part B, such as an epoxy, acrylate, silicone, or urethanes. The two parts can be cured by room temperature vulcanizable crosslinking, catalytically curing such as peroxide for free radical cure, platinum for silicone hydrosilylation curing, or tin or zinc catalysts for silicone condensation curing. Practically speaking, part A can be loaded in chemical adhesive layer 37B prior to infiltrate with Z-CNTs 39A. Meanwhile, Part B can be in chemical adhesive 40B, which is (as discussed below) applied directly to wing surface 42 (or other aircraft surface). A catalyst can be either in Part A or in Part B. When two parts meet together, the curing will start to form the chemical adhesive bond, reinforced by Z-CNTs 39A.

Once Z-CNTs 39A are introduced to chemical adhesive 37B, Z-CNTs 39A ply together and fill in voids within the adhesive, creating Z-CNT loaded chemical adhesive 38B. The vertically aligned nature of Z-CNTs 39A increases the strength and stiffness of chemical adhesive 37B. Z-CNTs 39A accomplish this due to their vertically aligned make-up, and by filling voids within the adhesive. This allows for a stronger bond between pneumatic de-icer 20, the adhesive, and the aircraft.

FIG. 3D shows the bonding of Z-CNT loaded chemical adhesive 38B onto pneumatic de-icer 20 to create pneumatic de-icer adhesive assembly 16B. Here, Z-CNT loaded chemical adhesive 38B is applied to pneumatic de-icer 20 by conventional methods such as lamination, pressing, or painting. Once Z-CNT loaded chemical adhesive 38B is attached to pneumatic de-icer 20, pneumatic de-icer assembly 16 (including PSA chemical adhesive 38B) can be applied directly to wing surface 42.

FIGS. 3E-3F show the application of chemical adhesive 40B onto wing surface 42 to create wing adhesive arrangement 18, and in preparation for bonding with pneumatic de-icer adhesive assembly 16B. Chemical adhesive 40B acts similar to a primer, promoting adhesion between wing surface 42 and Z-CNT loaded chemical adhesive 38B. But chemical adhesive 40B does not contain Z-CNTs.

Chemical adhesive 40B is a reactive adhesive used to bond pneumatic de-icer 20 to aircraft, for example, a single component adhesive, such as an oxygen cured (anaerobic), heat cured (phenolix, epoxy, or polyurethane), UV cured (arcylates, silicones), moisture cured (silicones, polyurethanes), or B-staged adhesive. Alternatively, chemical adhesive 38B can be a multi component adhesive with a part A and a part B, such as an epoxy, acrylate, silicone (e.g., room temperature vulcanizable adhesives or peroxide cure and catalyze, or platinum, tin, or zinc catalysts), or urethanes. Chemical adhesive 40B can be applied to wing surface 42 by convention methods such as painting, spraying, or dipping.

FIGS. 3G-3H show bonding of pneumatic de-icer adhesive assembly 16B to wing adhesive arrangement 18. After chemical adhesive 40B is applied to aircraft wing surface 42, pneumatic de-icer assembly 16 can be bonded to aircraft wing 34. Pneumatic de-icer assembly 16 can be applied by mechanical force to wing surface 42.

Typically, chemical adhesives take hours or days to cure. Thus, where chemical adhesives are used to apply ice protection systems on aircraft, there is a substantial time lag between application of the ice protection system and resumed function of the aircraft. With Z-CNTs loaded into the chemical adhesives, the bond between the ice protection system and the aircraft surface is stronger and forms quicker. This allows for more efficient application of ice protection systems.

Use of Z-CNTs in adhesives for pneumatic de-icer boot application to aircraft wings allows for both faster application and higher bond strength. Several days of curing chemical adhesives are no longer needed to secure pneumatic de-icers to aircraft wings. This allows aircrafts to return to function quicker.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. An ice protection arrangement for an aircraft surface comprising:
a de-icer assembly (16);
a primer (40) attachable to the aircraft surface; and
an adhesive (38) containing vertically aligned carbon nanotubes being, in use, oriented along their
longitudinal axes normal to the aircraft surface and being positioned between and
attached to both the primer and the de-icer assembly.

2. The assembly of claim 1, wherein the de-icer assembly is a pneumatic de-icer or a propeller de-icer.

3. The assembly of claim 1 or 2, wherein the primer is selected from the group consisting of anaerobic adhesives, heat cured adhesives, ultraviolet cured adhesives, moisture cured adhesives, B-staged adhesives, epoxies, acrylates, silicones, and urethanes.

4. The assembly of claim 1, 2 or 3, wherein the adhesive is a non-curing adhesive, and preferably wherein the non-curing adhesive is selected from the group consisting of pressure sensitive adhesives, solvent based adhesives, and contact adhesives, wherein the pressure sensitive adhesives are selected from the group consisting of acrylates, silicones, nitriles, and styrenes.

5. The assembly of any of claims 1 to 3, wherein the adhesive is a reactive adhesive, and preferably wherein the reactive adhesive is a one component adhesive selected from the group consisting of anaerobic adhesives, heat cured adhesives, ultraviolet cured adhesives, moisture cured adhesives, and B-staged adhesives, or wherein the reactive adhesive is a two component adhesive selected from the group consisting of epoxies, acrylates, silicones, and urethanes.

6. The assembly of any preceding claim, further comprising an assembly primer positioned between and attached to both the de-icer assembly and the adhesive.

7. A method of attaching an ice protection arrangement to an aircraft surface comprising:
applying an adhesive containing vertically aligned carbon nanotubes to a de-icer assembly, wherein
the carbon nanotubes being, in use, are oriented along their longitudinal axes normal to the aircraft surface; priming the aircraft surface with a primer; and
adhering the de-icer assembly to the aircraft surface by attaching the adhesive to the primer.

8. The method of claim 7, wherein applying an adhesive to the de-icer assembly comprises brushing, laminating, or pressing.

9. The method of claim 7, wherein applying an adhesive to the de-icer assembly comprises wetting out the adhesive to the de-icer.

10. The method of claim 9, further comprising applying a primer to the de-icer assembly prior to wetting out the adhesive.

11. The method of any of claims 7 to 10, wherein priming the aircraft surface comprises applying a chemical adhesive to the aircraft surface.

12. The method of any of claims 7 to 10, wherein adhering the de-icer assembly to the aircraft surface comprises wetting out the adhesive to the aircraft surface or wherein adhering the de-icer assembly to the aircraft surface comprises curing the adhesive to the aircraft surface.

13. The method of any of claims 7 to 12, further comprising preparing the adhesive containing vertically aligned carbon nanotubes.

14. The method of claim 13, wherein preparing the adhesive comprises filling a chemical adhesive with the carbon nanotubes.

15. The method of claim 13, wherein preparing the adhesive comprises:
attaching a sheet containing the carbon nanotubes to a pressure sensitive adhesive; applying pressure to the sheet and the pressure sensitive adhesive such that the carbon nanotubes transfer to the pressure sensitive adhesive; and removing the sheet.

## Patentansprüche

1. Vereisungsschutzanordnung für eine Luftfahrzeugoberfläche, umfassend:
eine Enteiserbaugruppe (16);
einen Primer (40), der an der Luftfahrzeugoberfläche befestigbar ist; und
einen Klebstoff (38), der vertikal ausgerichtete Kohlenstoff-Nanoröhrchen enthält, die bei Gebrauch entlang ihrer Längsachsen senkrecht zur Luftfahrzeugoberfläche ausgerichtet sind und positioniert zwischen und sowohl an dem Primer als auch der Enteiserbaugruppe befestigt sind.

2. Baugruppe nach Anspruch 1, wobei die Enteiserbaugruppe ein pneumatischer Enteiser oder ein Propellerenteiser ist.

3. Baugruppe nach Anspruch 1 oder 2, wobei der Primer aus der Gruppe bestehend aus anaeroben Klebstoffen, wärmegehärteten Klebstoffen, UV-gehärteten Klebstoffen, feuchtigkeitsgehärteten Klebstoffen, B-stufigen Klebstoffen, Epoxiden, Acrylaten, Silikonen und Urethanen ausgewählt ist.

4. Baugruppe nach Anspruch 1, 2 oder 3, wobei der Klebstoff ein nicht aushärtender Klebstoff ist, und wobei der nicht aushärtende Klebstoff bevorzugt aus der Gruppe bestehend aus druckempfindlichen Klebstoffen, Klebstoffen auf Lösungsmittelbasis und Kontaktklebstoffen ausgewählt ist, wobei die druckempfindlichen Klebstoffe aus der Gruppe bestehend aus Acrylaten, Silikonen, Nitrilen und Styrolen ausgewählt sind.

5. Baugruppe nach einem der Ansprüche 1 bis 3, wobei der Klebstoff ein Reaktionsklebstoff ist, und wobei der Reaktionsklebstoff bevorzugt ein Einkomponentenklebstoff ist, der aus der Gruppe bestehend aus anaeroben Klebstoffen, wärmegehärteten Klebstoffen, UV-gehärteten Klebstoffen, feuchtigkeitsgehärteten Klebstoffen und B-stufigen Klebstoffen ausgewählt ist, oder wobei der Reaktionsklebstoff ein Zweikomponentenklebstoff ist, der aus der Gruppe bestehend aus Epoxiden, Acrylaten, Silikonen und Urethanen ausgewählt ist.

6. Baugruppe nach einem der vorhergehenden Ansprüche, ferner umfassend einen Baugruppenprimer, der positioniert ist zwischen und sowohl an der Enteiserbaugruppe als auch dem Klebstoff befestigt ist.

7. Verfahren zum Befestigen einer Vereisungsschutzanordnung an einer Luftfahrzeugoberfläche, umfassend:
Aufbringen eines Klebstoffs, der vertikal ausgerichtete Kohlenstoff-Nanoröhrchen enthält, auf eine Enteiserbaugruppe, wobei die Kohlenstoff-Nanoröhrchen in Gebrauch entlang ihrer Längsachsen senkrecht zur Luftfahrzeugoberfläche ausgerichtet sind; Primen der Luftfahrzeugoberfläche mit einem Primer; und
Kleben der Enteiserbaugruppe an die Luftfahrzeugoberfläche durch Befestigen des Klebstoffs an dem Primer.

8. Verfahren nach Anspruch 7, wobei das Aufbringen eines Klebstoffs auf die Enteiserbaugruppe ein Bürsten, Laminieren oder Drücken umfasst.

9. Verfahren nach Anspruch 7, wobei das Aufbringen eines Klebstoffs auf die Enteiserbaugruppe ein Benetzen des Klebstoffs an dem Enteiser umfasst.

10. Verfahren nach Anspruch 9, ferner umfassend Aufbringen eines Primers auf die Enteiserbaugruppe vor dem Benetzen des Klebstoffs.

11. Verfahren nach einem der Ansprüche 7 bis 10, wobei das Primen der Luftfahrzeugoberfläche ein Aufbringen eines chemischen Klebstoffs auf die Luftfahrzeugoberfläche umfasst.

12. Verfahren nach einem der Ansprüche 7 bis 10, wobei das Kleben der Enteiserbaugruppe an die Luftfahrzeugoberfläche ein Benetzen des Klebstoffs an der Luftfahrzeugoberfläche umfasst oder wobei das Kleben der Enteiserbaugruppe an die Luftfahrzeugoberfläche ein Aushärten des Klebstoffs auf der Luftfahrzeugoberfläche umfasst.

13. Verfahren nach einem der Ansprüche 7 bis 12, ferner umfassend Vorbereiten des Klebstoffs, der vertikal ausgerichtete Kohlenstoff-Nanoröhrchen enthält.

14. Verfahren nach Anspruch 13, wobei das Vorbereiten des Klebstoffs ein Befüllen eines chemischen Klebstoffs mit den Kohlenstoff-Nanoröhrchen umfasst.

15. Verfahren nach Anspruch 13, wobei das Vorbereiten des Klebstoffs Folgendes umfasst:
Befestigen einer Folie, die die Kohlenstoff-Nanoröhrchen enthält, an einem druckempfindlichen Klebstoff;
Anwenden von Druck auf die Folie und den druckempfindlichen Klebstoff derart, dass die Kohlenstoff-Nanoröhrchen auf den druckempfindlichen Klebstoff übertragen werden; und
Entfernen der Folie.

## Revendications

1. Agencement de protection contre le givre pour une surface d'aéronef comprenant :
un ensemble dégivreur (16) ;
une primaire (40) pouvant être fixée à la surface d'aéronef ; et
un adhésif (38) contenant des nanotubes de carbone alignés verticalement qui sont, en utilisation, orientés le long de leurs axes longitudinaux perpendiculaires à la surface d'aéronef et qui sont positionnés entre et fixés à la fois à la primaire et à l'ensemble dégivreur.

2. Ensemble selon la revendication 1, dans lequel l'ensemble dégivreur est un dégivreur pneumatique ou un dégivreur d'hélice.

3. Ensemble selon la revendication 1 ou 2, dans lequel la primaire est choisie dans le groupe constitué d'adhésifs anaérobies, d'adhésifs thermodurcis, d'adhésifs durcis aux rayons ultraviolets, d'adhésifs durcis à l'humidité, d'adhésifs à la phase B, d'époxys, d'acrylates, de silicones, et d'uréthanes.

4. Ensemble selon la revendication 1, 2 ou 3, dans lequel l'adhésif est un adhésif non durcissant, et de préférence dans lequel l'adhésif non durcissant est choisi dans le groupe constitué d'adhésifs sensibles à la pression, d'adhésifs à base de solvant, et d'adhésifs de contact, dans lequel les adhésifs sensibles à la pression sont choisis dans le groupe constitué d'acrylates, de silicones, de nitriles, et de styrènes.

5. Ensemble selon l'une quelconque des revendications 1 à 3, dans lequel l'adhésif est un adhésif réactif, et de préférence dans lequel l'adhésif réactif est un adhésif monocomposant choisi dans le groupe constitué d'adhésifs anaérobies, d'adhésifs thermodurcis, d'adhésifs durcis aux rayons ultraviolets, d'adhésifs durcis à l'humidité, et d'adhésifs à la phase B, ou dans lequel l'adhésif réactif est un adhésif bicomposant choisi dans le groupe constitué d'époxys, d'acrylates, de silicones, et d'uréthanes.

6. Ensemble selon une quelconque revendication précédente, comprenant en outre une primaire d'ensemble positionnée entre et fixée à la fois à l'ensemble dégivreur et à l'adhésif.

7. Procédé de fixation d'un agencement de protection contre le givre à une surface d'aéronef comprenant :
l'application d'un adhésif contenant des nanotubes de carbone alignés verticalement sur un ensemble dégivreur, dans lequel les nanotubes de carbone étant, en utilisation, sont orientés le long de leurs axes longitudinaux perpendiculaires à la surface d'aéronef ;
le dépôt d'une primaire sur la surface d'aéronef ; et
le fait de faire adhérer l'ensemble dégivreur sur la surface d'aéronef en fixant l'adhésif à la primaire.

8. Procédé selon la revendication 7, dans lequel l'application d'un adhésif sur l'ensemble dégivreur comprend le brossage, la stratification, ou le pressage.

9. Procédé selon la revendication 7, dans lequel l'application d'un adhésif sur l'ensemble dégivreur comprend l'humidification de l'adhésif sur le dégivreur.

10. Procédé selon la revendication 9, comprenant en outre l'application d'une primaire sur l'ensemble dégivreur avant l'humidification de l'adhésif.

11. Procédé selon l'une quelconque des revendications 7 à 10, dans lequel le dépôt sur la surface d'aéronef comprend l'application d'un adhésif chimique sur la surface d'aéronef.

12. Procédé selon l'une quelconque des revendications 7 à 10, dans lequel le fait de faire adhérer l'ensemble dégivreur sur la surface d'aéronef comprend l'humidification de l'adhésif sur la surface d'aéronef ou dans lequel le fait de faire adhérer l'ensemble dégivreur sur la surface d'aéronef comprend le durcissement de l'adhésif sur la surface d'aéronef.

13. Procédé selon l'une quelconque des revendications 7 à 12, comprenant en outre la préparation de l'adhésif contenant des nanotubes de carbone alignés verticalement.

14. Procédé selon la revendication 13, dans lequel la préparation de l'adhésif comprend le remplissage d'un adhésif chimique avec les nanotubes de carbone.

15. Procédé selon la revendication 13, dans lequel la préparation de l'adhésif comprend :
la fixation d'une feuille contenant les nanotubes de carbone à un adhésif sensible à la pression ;
l'application d'une pression sur la feuille et l'adhésif sensible à la pression de telle sorte que les nanotubes de carbone soient transférés à l'adhésif sensible à la pression ; et
le retrait de la feuille.
